# EUROPEAN PATENT APPLICATION

(11) **EP 3 098 464 A1**
(43) Date of publication of application: **30.11.2016**
(21) Application number: 15740503.6
(22) Date of filing: 19.01.2015
(51) Int. Cl.: F16C 17/02, C08K 3/04, C08L 61/06, F16C 33/16, F16C 33/20

(54) **SLIDING BEARING**

(30) Priority: 21.01.2014 JP 2014009014
(71) Applicant: Oiles Corporation, Minato-ku Tokyo 108-0075 (JP)
(72) Inventor: SHIBAMIYA, Takashi, Fujisawa-shi Kanagawa 252-0811 (JP)
(74) Representative: Strehl Schübel-Hopf & Partner
(86) International application number: PCT/JP2015/051272
(87) International publication number: WO 2015/111552

(57) **Abstract**

A sliding bearing formed from a member containing resin, wherein the effect of thermal expansion of the resin is reduced. A bearing surface (10) that slidably holds the outer peripheral surface of a rotating body is formed on the inner peripheral surface (11) of the sliding bearing (1), which is cylindrical, and the sliding bearing (1) is a cylindrical multi-layer sliding member which is manufactured by roll-molding a base material that has been impregnated with a base resin. A plurality of through-holes (13) that pass between the inner peripheral surface (11) and the outer peripheral surface (12) are formed at suitable intervals in the bearing surface (10) and within a range that enables the sliding bearing (1) to maintain a required load-bearing strength. A solid lubricant (14) that has higher thermal conductivity than air and a lower thermal expansion coefficient than the base resin is embedded in the through-holes (13) in accordance with a required sliding performance and use conditions (such as the continuous use time in the atmosphere). A substance comprising graphite alone, a substance made of a resin that contains graphite, or the like is used as this type of solid lubricant (14).

## Description

### Technical Field

The present invention relates to a sliding bearing, and in particular relates to a sliding bearing suitable for using both in the atmosphere and in water.

### Background Art

Patent Literature 1 discloses a sliding member that has good sliding characteristics both in the atmosphere and in water. The sliding member is made by layering woven fabrics impregnated with phenol resin to which lubricant such as graphite, polytetrafluoroethylene (PTFE), boron nitride (BN) or the like is added for improving slidability. This sliding member is used in a sliding bearing for a drain pump draining rainwater, river water, or seawater, for example. In the drain pump draining rainwater, river water, seawater or the like, a motor rotates a shaft joined to an impeller to draw and drain rainwater, river water, seawater or the like. The sliding bearing for the drain pump is used for holding the shaft slidably. In the drain pump draining rainwater, river water, seawater or the like, the shaft is arranged in a drainage (casing) for draining rainwater, river water, seawater or the like that is drawn. Accordingly, the sliding bearing for the drain pump has a sliding characteristic such that the slidingbearingholds the shaft slidably in the atmosphere from a start of operation of the drain pump until water is drawn, and holds the shaft slidably in the water after the water is drawn.

### Citation List

### Patent Literature

Patent Literature 1: Japanese Unexamined Patent Application Laid-Open No. 2004-91606

### Summary of Invention

### Technical Problem

As for a drain pump for draining rainwater, river water, seawater or the like, the time elapsing from a start of operation of the drain pump to drawing water is very short, few minutes at the longest, when the impeller is submerged in water. Sometimes, however, a drain pump is operated in preparation to heavy rain, typhoon, river flooding, or the like in a state that the impeller is not submerged in water. In that case, it follows that the sliding bearing of the drain pump holds the shaft in the atmosphere for a long time (for example, 1 hour). As a result, frictional heat generated between the inner peripheral surface (bearing surface) of the sliding bearing of the drain pump and the outer peripheral surface of the shaft contacting with the inner peripheral surface can have adverse effects on the performance of the drain pump.

That is to say, in the case where a sliding member using resin such as phenol resin is employed as a sliding bearing of a drain pump, the resin such as phenol resin thermally expands with increase in temperature caused by the frictional heat, resulting in dimensional change of the sliding bearing of the drain pump. Here, since the outer peripheral surface of the sliding bearing of the drain pump is fixed to a bearing case via a retainer, the dimensional change appears concentratedly on the inner peripheral side of the sliding bearing of the drain pump, and accordingly the dimensional change occurs in the direction of reducing the inner diameter of the sliding bearing of the drain pump. As a result, between the inner peripheral surface of the sliding bearing of the drain pump and the outer peripheral surface of the shaft, the contact pressure increases, and the frictional force between them increases. Accordingly, rotation of the shaft is weakened, and the performance of the drain pump is worsened. And, frictional heat is generated further as a result of the increase of the frictional force, and the performance of the drain pump is further worsened, falling into a vicious circle.

The present invention has been made considering the above situations. An object of the present invention is to provide a sliding bearing formed of a member that includes resin, in which the effect of thermal expansion of the resin is reduced.

### Solution to Problem

To solve the above problems, the present invention provides a sliding bearing formed of a member that includes resin, wherein: heat effect reduction structure as structure for allowing dimensional change along the bearing surface due to thermal expansion of the resin is formed in the bearing surface for supporting an object or in a back surface which is a surface on an opposite side of the bearing surface.

The heat effect reduction structure may be a hole or a groove provided in the bearing surface or the back surface. In the case where the heat effect reduction structure is a hole, it is favorable that the hole passes through the bearing surface and the back surface. Further, when the heat effect reduction structure is a groove, it is favorable that the groove runs from the bearing surface to an end face (a surface connected to an edge of the bearing surface). Further, solid lubricant having thermal conductivity higher than air and having at least one of thermal expansion coefficient and friction coefficient lower than the base resin may be embedded in the hole or the groove provided as the heat effect reduction structure.

### Advantageous Effects of Invention

According to the present invention, the heat effect reduction structure provided in the bearing surface or the back surface can disperse dimensional change of the sliding bearing caused by thermal expansion of the resin, to prevent the dimensional change of the sliding bearing from concentrating in the direction of raising the contact pressure between the bearing surface and the supported object. For example, in the case where a hole is provided as the heat effect reduction structure, dimensional change in the direction of reducing the hole diameter of the hole caused by thermal expansion of the resin can prevent dimensional change of the sliding bearing from concentrating in the direction of raising the contact pressure between the bearing surface and the supported object. Here, in addition, when the hole provided as the heat effect reduction structure passes through the bearing surface and the back surface, frictional heat generated by sliding between the bearing surface and the supported object can be exhausted from the back surface via the hole. In the case where a groove is provided as the heat effect reduction structure, dimensional change in the direction of reducing the width of the groove caused by thermal expansion of the resin can prevent dimensional change of the sliding bearing from concentrating in the direction of raising the contact pressure between the bearing surface and the supported object. Here, in addition, when the groove provided as the heat effect reduction structure runs from the bearing surface to an end face, frictional heat generated by sliding between the bearing surface and the supported object can be exhausted from the end face via the groove. Thus, effects of thermal expansion of the resin can be reduced.

### Brief Description of Drawings

Fig. 1(A) is a front elevation of a sliding bearing 1 according to one embodiment of the present invention, and Fig. 1(B) is an A-A cross-section of the sliding bearing shown in Fig. 1(A);
Fig. 2 is a view for explaining a journal test;
Fig. 3 is a diagram showing measurement results of temperatures of the specimens 2A - 2C shown in Table 2 in journal test performed on the specimens 2A - 2C under the conditions shown in Table 1;
Fig. 4 is a diagram showing test results of friction coefficients of the specimens 2A - 2C shown in Table 2 in journal test performed on the specimens 2A - 2C under the conditions shown in Table 1; and
Fig. 5(A) is a top view showing a variation 1A of the sliding bearing 1 according to the one embodiment of the present invention, and Fig. 5 (B) is a B-B cross-section of the variation 1A shown in Fig. 5(A).

### Description of Embodiment

In the following, embodiments of the present invention will be described referring to drawings.

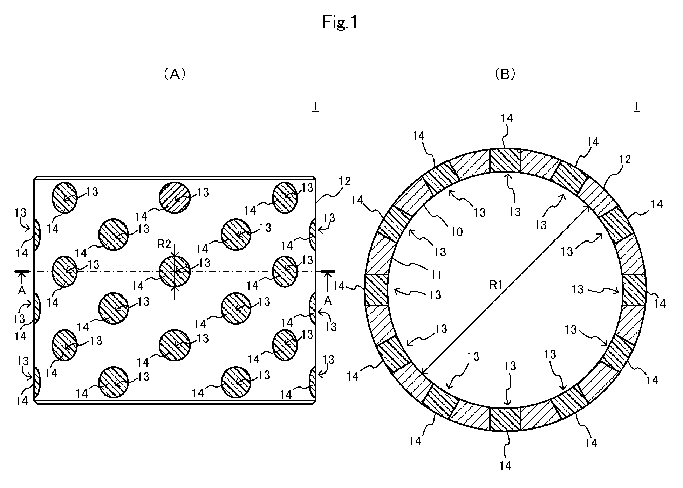

Fig. 1(A) is a front elevation of a sliding bearing 1 according to one embodiment of the present invention, and Fig. 1(B) is an A-A cross-section of the sliding bearing shown in Fig. 1(A).

As shown in the figures, the sliding bearing 1 of the present embodiment is a sliding bearing of a cylindrical shape, in which a bearing surface 10 for holding an outer peripheral surface of a rotating body slidably is formed as an inner peripheral surface 11. The sliding bearing 1 is a multi-layer sliding member of a cylindrical shape produced by roll-molding of a base material impregnated with base resin. Here, thermosetting resin such as phenol resin is used as the base resin, and lubricant such as graphite, PTFE, BN or the like for improving slidability is added to the base resin depending on the required sliding performance. Further, as the base material, woven fabric or nonwoven fabric of fiber having high affinity for the base resin (for example, woven fabric or nonwoven fabric of carbon fiber, PET fiber or the like is used when phenol resin is used as the base resin) is used.

In the bearing surface 10 of the sliding bearing 1, a plurality of through-holes are formed. These through-holes pass through between the inner peripheral surface 11 and the outer peripheral surface 12 at suitable intervals to the extent that the load-bearing strength required for the sliding bearing 1 can be maintained. In each of these through-holes 13, a solid lubricant 14 is embedded. The solid lubricant 14 has the thermal conductivity higher than that of air and has the thermal expansion coefficient and the friction coefficient lower than those of the base resin depending on the required sliding performance and use conditions (such as continuous operating time in the atmosphere) . As such solid lubricant 14, simple graphite, resin lubricant containing graphite, or the like can be used. However, it is not necessary that the solid lubricant 14 is embedded in each of all the through-holes 13. It is sufficient that the solid lubricants 14 are embedded in the required number of through-holes depending on the required sliding performance and use conditions.

The sliding bearing 1 of the above-described construction is suitable for use both in the atmosphere and in water, and is particularly suitable as a sliding bearing for a drain pump for draining rainwater, river water, seawater or the like, which is used for a long time in the atmosphere.

The present inventor made two specimens 2A and 2B of the sliding bearing 1 according to the present embodiment. These two specimens 2A and 2B are different in existence of the solid lubricant 14. In addition, the present inventor made a specimen C of a conventional product (a cylinder-shaped multi-layer sliding member in which through-holes 13 are not formed) as a comparison object using the same material as the specimens 2A and 2B. These specimens 2A - 2C were subjected to journal tests under the conditions shown in the following Table 1, and bearing temperature and friction coefficient were measured at that time.

**Table 1**

| | |
|---|---|
| Test environment | In the atmosphere (no blow) |
| Opposite material | Material: Stainless steel (SUS403) Shape: Cylinder (outer diameter ϕ 59.9mm) |
| Surface pressure | About 1.5 kgf/cm² |
| Speed | About 6 m/s |
| Rotation number | 1,910 rpm |
| Room temperature | About 26°C |

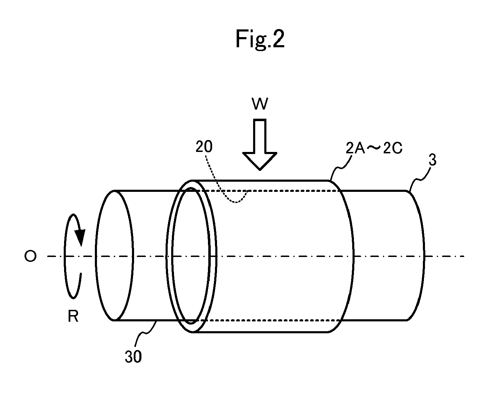

In the journal tests, as shown in Fig. 2, in a state that an opposite material 3 was inserted in a specimen 2A - 2C, the opposite material 3 was rotated in the rotational direction R about the axial center O at the speed and the rotation number shown in Table 1 while a load W was applied to the specimen 2A - 2C in the vertical direction to the axial center O so that the inner peripheral surface (bearing surface) 20 pressed against the outer peripheral surface 30 of the opposite material 3 at the surface pressure shown in Table 1. And the temperature and the friction coefficient of the specimen 2A - 2C were measured at that time.

The prepared specimens 2A - 2C were as shown in the following Table 2. Here, graphite powder was used as the lubricant added to phenol resin. And, cylinder-shaped graphite was used as the solid lubricants 14 embedded in the through-holes 13 in the specimen 2B.

**Table 2**

| Specimen | 2A | 2B | 2C (comparative example) |
|---|---|---|---|
| Shape | Cylinder (inner diameter ϕ about 60.2 mm) | | |
| Base material | Woven fabric of carbon fiber | | |
| Base resin | Phenol resin added with lubricant | | |
| Through-hole | Existent (hole diameter ϕ about 8 mm; 25 % of inner peripheral surface) | | Non-existent |
| Solid lubricant | Non-existent | Existent | |

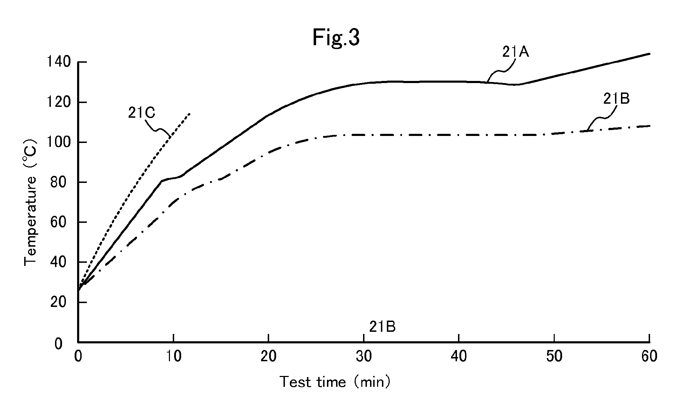

Fig. 3 is a diagram showing measurement results of temperatures of the specimens 2A - 2C shown in Table 2 in the journal tests performed on the specimens 2A - 2C under the conditions shown in Table 1. Here, the horizontal axis indicates test time, and the vertical axis indicates temperature. Further, lines 21A - 21C in the graph show measurement results of temperatures of the specimens 2A - 2C.

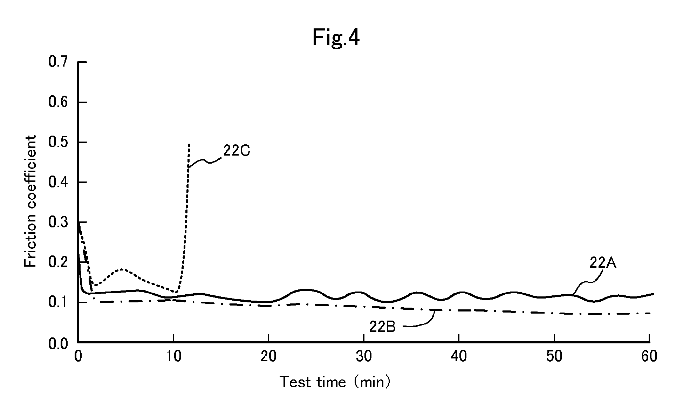

Fig. 4 is a diagram showing test results of friction coefficients of the specimens 2A - 2C in the journal tests performed on the specimens 2A - 2C shown in Table 2 under the conditions shown in Table 1. Here, the horizontal axis indicates test time, and the vertical axis indicates friction coefficient. Further, lines 22A - 22C in the graph show measurement results of friction coefficients of the specimens 2A - 2C.

As shown by the line 21C in the graph of Fig. 3 and the line 22C in the graph of Fig. 4, the temperature of the specimen 2C of the conventional product (with no through-hole 13) rose from the start of the test, and reached about 100 degrees after 10 minute passage. After exceeding about 100 degrees, the friction coefficient increased rapidly, and it became impossible for the opposite material 3 to rotate, and the test could not be continued. It is considered that this occurred because, due to the rise of the temperature of the specimen 2C, the resin such as phenol resin used as the base resin of the specimen 2C thermally expanded, and accordingly the specimen 2C changed in its dimension in the direction of reducing the inner diameter R1 of the specimen 2C, and the contact pressure between the bearing surface 10 and the opposite material 3 increased, so that the specimen 2C clamped the opposite material 3 strongly.

On the other hand, as shown by the line 21A in the graph of Fig. 3 and the line 22A in the graph of Fig. 4, the temperature of the specimen 2A (having the through-holes 13 and without having solid lubricant 14) of the sliding bearing 1 of the present embodiment rose from the start of the test similarly to the specimen 2C of the conventional product. However, the temperature of the specimen 2A was about 80 degrees at 10 minute passage, which was lower than the specimen 2C of the conventional product. Further, even when the temperature exceeded 100 degrees after about 15 minute passage, the friction coefficient was stable at about 0.12. It is considered that this occurred because frictional heat generated in the bearing surface 10 of the specimen 2A by sliding over the opposite material 3 was exhausted via the through-holes 13, and thereby rise of the temperature was suppressed. In addition, it is considered that thermal expansion of the resin such as phenol resin used as the base resin of the specimen 2A caused dimensional change in the direction of reducing the hole diameter R2 of the through-holes 13, thereby, the dimensional change caused by the increased temperature of the specimen 2A was dispersed and the dimensional change in the direction of reducing the inner diameter R1 of the specimen 2A became smaller, as a result, the increase of the contact pressure between the bearing surface 10 of the specimen 2A and the opposite material 3 was suppressed.

Further, as shown by the line 21B in the graph of Fig. 3 and the line 22B in the graph of Fig. 4, the temperature of the specimen 2B (having the through-holes 13 and solid lubricant 14) of the sliding bearing 1 of the present embodiment was about 70 degrees at 10 minute passage. Thus the temperature rise was further suppressed in comparison with the specimen 2A (having the through-holes 13 and without having solid lubricant 14). Further, even when the temperature exceeded 100 degrees after about 30 minute passage, it was possible to make the friction coefficient stable at about 0.10. It is considered that this occurred because, since the thermal conductivity of the solid lubricant 14 is higher than that of air, the solid lubricant 14 could more efficiently exhaust the frictional heat generated in the bearing surface 10 of the specimen 2B by sliding over the opposite material 3. Further, it is considered that, since the thermal expansion coefficient of the solid lubricant 14 was lower than that of the resin such as phenol resin used as the base resin of the specimen 2B, thermal expansion of the resin such as phenol resin caused dimensional change in the direction of reducing the hole diameter R2 of the through-holes 13 without being prevented by the existence of the solid lubricant 14, thereby the dimensional change caused by the increased temperature of the specimen 2B was dispersed and dimensional change in the direction of reducing the inner diameter R1 of the specimen 2B became smaller, as a result, the increase of the contact pressure between the bearing surface 10 of the specimen 2B and the opposite material 3 was suppressed. Further, it is considered that the above test results were obtained because the solid lubricant improved the sliding performance of the bearing surface 10 of the specimen 2B.

Hereinabove, one embodiment of the present invention has been described.

According to the present embodiment, since thermal expansion of the base resin of the sliding bearing causes the dimensional change in the direction of reducing the hole diameter R2 of the through-holes 13, dimensional change of the sliding bearing 1 can be prevented from concentrating in the direction of raising the contact pressure between the bearing surface 10 and the supported object. And the frictional heat generated by sliding over the supported object can be exhausted from the outer peripheral surface 12 via the through-holes 13. Accordingly, effects of the thermal expansion of the base resin can be lowered.

Further, in the case where the solid lubricants 14 having the higher thermal conductivity than that of air and the lower thermal expansion coefficient and the lower friction coefficient than those of the base resin are embedded in the through-holes 13 of the sliding bearing 1, the frictional heat generated in the bearing surface 10 of the slidingbearing 1 canbe exhausted more efficiently. Further, in that case, since the thermal expansion of the base resin of the sliding bearing 1 causes dimensional change in the direction of reducing the hole diameter R2 of the through-holes 13 without being prevented by the existence of the solid lubricants 14, the dimensional change of the sliding bearing 1 can be prevented from concentrating in the direction of raising the contact pressure between the bearing surface 10 and the supported object. And further the solid lubricants 14 can improve the sliding performance of the bearing surface 10 of the sliding bearing 1. Accordingly, effects of the thermal expansion of the base resin can be lowered furthermore.

The present invention is not limited to the above-described embodiment, and can be changed variously within the scope of the invention.

For example, in the above embodiment, a plurality of through-holes 13 passing through between the inner peripheral surface 11 and the outer peripheral surface 12 are arranged almost uniformly in the axial direction of the sliding bearing 1. The present invention, however, is not limited to this. In the axial direction of the sliding bearing 1, more through-holes 18 may be located in the center side than in the end sides of the sliding bearing 1. By this arrangement, in the axial direction of the sliding bearing 1, frictional heat generated in the center side of the bearing surface 10, in which exhaustion of heat is considered to be more difficult than in the end sides, can be exhausted more efficiently. Further, the shape of the through-holes 13 is not limited to circle, and the through-holes 13 may have another shape such as ellipse, square, or the like.

Further, in the above embodiment, a plurality of through-holes 13 passing through between the inner peripheral surface 11 and the outer peripheral surface 12 are provided in the bearing surface 10 of the sliding bearing 1. The present invention, however, is not limited to this. It is sufficient that, in the slidingbearing 1 of the present invention, a heat effect reduction structure, which is structure for allowing dimensional change along the bearing surface 10 due to thermal expansion of the base resin, is provided in the inner peripheral surface 11 or the outer peripheral surface 12. For example, it is sufficient that the sliding bearing 1 is provided with holes or grooves in at least one of the inner peripheral surface 11 and the outer peripheral surface 12 of the sliding bearing 1. Or, holes and grooves may coexist. Further, it is not necessary to embed solid lubricant in all the holes and grooves, and it is sufficient that solid lubricant is embedded in desired holes and grooves in the number required.

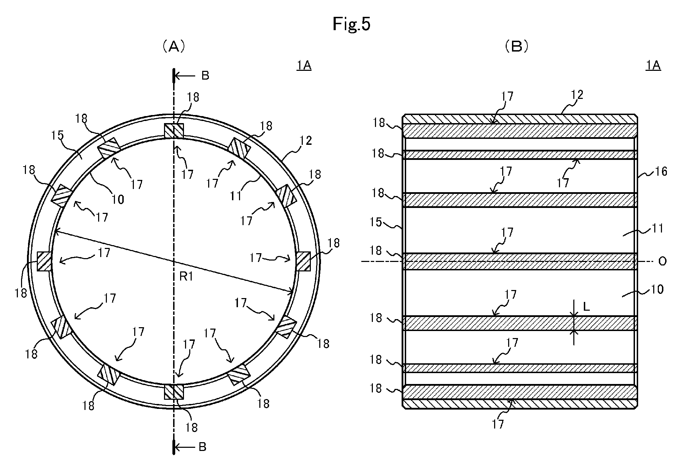

Fig. 5(A) is a top view showing a variation 1A of the sliding bearing 1 of the above embodiment, and Fig. 5(B) is a B-B cross-section of the variation 1A shown in Fig. 5 (A). Here, parts having the same functions as those of parts in the sliding bearing 1 shown in Figs. 1(A) and 1(B) are indicated by the same symbols, respectively.

As shown in the figures, in the bearing surface 10 of the sliding bearing 1A, are formed a plurality of grooves 17 are formed as far as it is possible to keep the strength for withstanding the load required for the sliding bearing 1A. The grooves 17 run from one end face 15 to the other end face 16 along the axis O. In these grooves, solid lubricants 18 are embedded. The solid lubricants 18 have the thermal conductivity higher than that of air and have the thermal expansion coefficient and the friction coefficient lower than those of the base resin depending on the required sliding performance and use conditions (such as continuous operating time in the atmosphere). As such solid lubricant 18, simple graphite, resin lubricant containing graphite, or the like can be used. It is not necessary that the solid lubricant is embedded in each of all the grooves 17. It is sufficient that the solid lubricants 18 are embedded in the required number of grooves 17 depending on the required sliding performance and use conditions.

Also in the sliding bearing 1A of the above construction, thermal expansion of the base resin causes dimensional change in the direction of reducing the groove width L of the grooves 17. Thereby, it is possible to prevent the dimensional change of the sliding bearing 1A from concentrating in the direction of raising the contact pressure between the bearing surface 10 and the supported object. And the frictional heat generated by sliding over the supported object can be exhausted from both end faces 15 and 16 via the grooves 17. Accordingly, effects of the thermal expansion of the base resin can be lowered. Further, in the case where the solid lubricants 18 having the thermal conductivity higher than that of air and the thermal expansion coefficient and the friction coefficient lower than those of the base resin are embedded in the grooves 17 formed in the bearing surface 10 of the sliding bearing, heat generated in the bearing surface 10 can be exhausted more efficiently. Further, in that case, since thermal expansion of the base resin causes dimensional change of the groove width L of the grooves 17 in the direction of becoming smaller without being prevented by the existence of the solid lubricants 18, it is possible to prevent the dimensional change of the sliding bearing 1A from concentrating in the direction of raising the contact pressure between the bearing surface 10 and the supported object. And further the solid lubricants 18 can improve the sliding performance of the bearing surface 10 of the sliding bearing 1A. Accordingly, effects of the thermal expansion of the base resin can be lowered furthermore.

In the above embodiments, although thermosetting resin such as phenol resin is used as the base resin of the sliding bearing 1, the present invention can be widely applied to sliding bearings using base resin that expands thermally. Further, in the above embodiments, although woven fabric of carbon fiber is used as the base material of the sliding bearing 1, the present invention can be widely applied to sliding bearings using, as base material, woven fabric or nonwoven fabric of fiber having high affinity for the base resin.

Further, although the above embodiments have been described taking an example of a multi-layer sliding member of a cylindrical shape produced by roll-molding of a base material impregnated with base resin, the present invention is not limited to this. The present invention can be applied similarly to a flat-plate sliding bearing, namely, a multi-layer sliding member having a shape of a flat plate, which is produced by compression molding of layered base materials impregnated with base resin. Further, the material for forming the sliding bearing is not limited to layered materials impregnated with base resin, and material containing resin can be used for forming the sliding bearing.

Further, although the above embodiments use the solid lubricant (specifically simple graphite or resin lubricant containing graphite) having the thermal conductivity higher than that of air and the thermal expansion coefficient and the friction coefficient lower than those of the base resin, the present invention is not limited to this. It is possible to use solid lubricant that has the thermal conductivity higher than air and has at least the lower thermal expansion or the lower friction coefficient than that of the base resin.

### Reference Signs List

1, 1A: sliding bearing; 10: bearing surface; 11: inner peripheral surface; 12: outer peripheral surface; 13: through-hole; 14, 18: solid lubricant; 15, 16: end face; and 17: groove.

## Claims

1. A sliding bearing formed of a member that includes resin, wherein:
heat effect reduction structure as structure for allowing dimensional change along a bearing surface due to thermal expansion of the resin is formed in the bearing surface or in a back surface which is a surface on an opposite side of the bearing surface.

2. A sliding bearing of Claim 1, wherein:
the heat effect reduction structure is a hole provided in the bearing surface or in the back surface.

3. A sliding bearing of Claim 2, wherein:
the hole passes through the bearing surface and the back surface.

4. A sliding bearing of Claim 3, wherein:
solid lubricant having a thermal conductivity higher than air and a thermal expansion coefficient lower than the resin is embedded in the hole.

5. A sliding bearing of Claim 3, wherein:
solid lubricant having a thermal conductivity higher than air and a friction coefficient lower than the resin is embedded in the hole.

6. A sliding bearing of Claim 1, wherein:
the heat effect reduction structure is a groove provided in the bearing surface or the back surface.

7. A sliding bearing of Claim 6, wherein:
the groove runs from the bearing surface to an end face as a surface connected to an edge of the bearing surface.

8. A sliding bearing of Claim 7, wherein:
solid lubricant having a thermal conductivity higher than air and a thermal expansion coefficient lower than the resin is embedded in the groove.

9. A sliding bearing of Claim 7, wherein:
solid lubricant having a thermal conductivity higher than air and a friction coefficient lower than the resin is embedded in the groove.

10. A sliding bearing of one of Claims 4, 5, 8 and 9, wherein:
the solid lubricant comprises graphite, or resin containing graphite.

11. A sliding bearing of one of Claims 1 - 10, wherein:
the resin is a thermosetting resin.

12. A sliding bearing of Claim 11, wherein:
the thermosetting resin is phenol resin.

13. A sliding bearing of one of Claims 1 - 12, wherein:
the member that includes resin is formed by layering base materials impregnated with the resin.

14. A sliding bearing of Claim 13, wherein:
the base materials are woven fabric or nonwoven fabric.
